# EUROPÄISCHE PATENTSCHRIFT

(11) **EP 2 324 070 B1**
(45) Veröffentlichungstag und Bekanntmachung des Hinweises auf die Patenterteilung: **07.09.2016**
(21) Anmeldenummer: 09777256.0
(22) Anmeldetag: 17.07.2009
(51) Int. Cl.: C09J 133/06

(54) **NICHTIONISCHE WASSER- UND LÖSUNGSMITTELLÖSLICHE ADDITIVE**
NON-IONIC ADDITIVES SOLUBLE IN WATER AND IN SOLVENTS
ADDITIFS NON IONIQUES SOLUBLES DANS L'EAU ET LES SOLVANTS

(30) Priorität: 16.08.2008 DE 102008038072
(43) Veröffentlichungstag der Anmeldung: 25.05.2011
(73) Patentinhaber: CLARIANT INTERNATIONAL LTD, 4132 Muttenz (CH)
(72) Erfinder: FECHNER, Björn, 24647 Wasbek (DE); SCHAEFER, Carsten, 84453 Mühldorf (DE); WÖRNDLE, Alexander, 60313 Frankfurt am Main (DE)
(74) Vertreter: Mikulecky, Klaus
(86) Internationale Anmeldenummer: PCT/EP2009/005198
(87) Internationale Veröffentlichungsnummer: WO 2010/020314

(56) Entgegenhaltungen:
- EP-A1- 1 323 789
- WO-A1-2006/038727

## Beschreibung

Gegenstand der vorliegenden Erfindung sind neuartige nichtionische Copolymere, die als Dispergiermittel für wasser- und lösemittelbasierende Pigmentpräparationen verwendet werden, und ein Verfahren zur Herstellung dieser Copolymere.

Für die Dispergierung von Pigmenten im flüssigen Medium sind üblicherweise Dispergiermittel notwendig. Diese Dispergiermittel, unterstützt durch geeignete Tenside, auch Benetzer genannt, fördern als oberflächenaktive Mittel die Benetzung der zu dispergierenden Pigmente und erleichtern das Aufbrechen von Agglomeraten und Aggregaten bei der Herstellung der Pigmentdispersion, welches in der Regel mit Hilfe einer Mahlung bewerkstelligt wird. Dispergiermittel können anionischer, kationischer, amphoterer oder neutraler Struktur sein. Sie können niedermolekularer Natur sein oder höhermolekulare Polymere darstellen, die eine statistische, alternierende, blockartige, kammartige oder sternförmig angeordnete Architektur der polymerisierten Monomere ausbilden. Von besonderer kommerzieller Bedeutung sind Dispergiermittel beispielsweise für die Dispergierung von Pigmenten bei der Herstellung von Pigmentkonzentraten, die zum Einfärben von Dispersions- und Lackfarben, Anstrichmitteln, Beschichtungsstoffen und Druckfarben verwendet werden, sowie zum Einfärben von Papier, Kartonagen und Textilien. Neuerdings sind Dispergiermittel und Additive gesucht, die nach einem Trocknungsprozess der flüssigen Dispersion eine schnelle Auflösung des trockenen Pulvers oder Granulates in dem Applikationsmedium sicherstellen. Hierzu können sich Kammpolymere eignen. Kammpolymere werden meist unter Verwendung von Makromonomeren auf Basis von Mono(meth)acrylsäureestern als Comonomere hergestellt und unterscheiden sich von anderen polymeren Dispergiermitteln dadurch, dass sie eine klar geordnete Struktur aufweisen, da Hydrophobie und Hydrophilie bzw. Polarität auf die Haupt- und die Seitenketten aufgeteilt werden kann.

In EP 1 293 523 wird ein Dispergiermittel beschrieben, welches ein Polymer ist, das ein gewichtsgemitteltes Molekülgewicht von etwa 5.000 bis 100.000 aufweist und 20 bis 80 Gew.-% eines hydrophilen Rückgrats und 80 bis 20 Gew.-% makromonomerer Seitenketten umfasst. Das Rückgrat besteht, bezogen auf das Gewicht des Rückgrats, zu 70 bis 98 Gew.-% aus polymerisierten ethylenisch ungesättigten Monomeren, die keine Carboxylgruppen enthalten, sowie zu 2 bis 30 Gew.-% aus polymerisierten ethylenisch ungesättigten Monomeren, die eine Carboxylgruppe tragen, wobei zumindest 10 % der Carboxylgruppen mit einem Amin oder einer anorganischen Base neutralisiert sind. Das Rückgrat weist im Vergleich zu den Seitenketten hydrophile Eigenschaften auf. Die Seitenketten bestehen aus Makromonomeren polymerisierter ethylenisch ungesättigter Monomere.

In EP 1 081 169 werden verzweigte Polymere beschrieben, die sich aus folgender Monomerenmischung ableiten:
- (A): 50 bis 93 Gew.-% wenigstens eines ethylenisch ungesättigten Monomers,
- (B): 2 bis 25 Gew.-% wenigstens eines ethylenisch ungesättigten Makromonomers mit einem Molekülgewicht von 1.000 bis 20.000, und
- (C): 5 bis 25 Gew.-% wenigstens eines polymerisierbaren Imidazolderivats.

EP 1 562 696 beschreibt in wässriger Emulsionspolymerisation hergestellte polymere Dispergiermittel, welche mit Makromonomeren synthetisiert werden, die aus Polyalkylenglykol-Mono(meth)acrylaten bestehen. Die Hauptkette des Polymers muss ethylenisch ungesättigte Monomere mit mindestens einer Aminogruppe enthalten.

In DE 10 2005 019 384 werden Kammpolymere beschrieben, die aus ethylenisch ungesättigten Monomeren wie Alkyl(meth)acrylaten und Aryl(meth)acrylaten in Kombination mit einem reinen Polyethylenglykol-Mono(meth)acrylat synthetisiert werden, und als Dispergiermittel verwendet werden.

WO 2006/038727 offenbart eine wässrige Dispersion zum Tintenstrahldrucken, enthaltend eine wässrige Dispersion von Teilchen eines Vinylpolymeren oder Polyesterbasierten Polymeren die einen Farbstoff und eine wasserunlösliche organische Verbindung enthält.

EP 1 323 789 beschreibt kammartige Polymere, die Polyalkylenoxid-Mono(meth)acrylat-Bausteine enthalten, jedoch nicht wasserlöslich sind. Ziel ist es, wässrige Tinten herzustellen. Analog dazu ist EP 1 491 598, enthaltend Polyalkylenoxid-Mono(meth)acrylat-Bausteine und salzbildene Monomere; die Polymere werden für wässrige Tinten verwendet.

Die angeführten Patente beschreiben den Stand der Technik, kammförmige oder blockbildende Polymere als Dispergiermittel bereitzustellen. Die durch die Trocknung resultierenden Pulver oder Granulate sind jedoch entweder nur im wässrigen oder nur im lösungsmittelhaltigen System leicht einrührbar. Keine bisher beschriebene Erfindung ist in der Lage, Dispergiermittel aufzuzeigen, die wässrige Pigmentdispersionen gut stabilisieren, wobei sich anschließend die Dispersionen gut trocknen lassen, beispielsweise durch eine Sprühtrocknung, und hierdurch ein Pulver oder Granulat ergeben, das in wässrige und in lösungsmittelhaltige Systeme leicht einrührbar ist, mit schneller und hoher Farbstärkeentwicklung. Der entscheidende Vorteil ist hier die universelle Dispergierbarkeit des Pulvers oder Granulates in wässrigen und lösungsmittelhaltigen Systemen.

Überraschenderweise wurde gefunden, dass spezielle nichtionische Kammcopolymere, die mit Hilfe von Makromonomeren aus Polyethylen/Polypropylenglykol-Mono(meth)acrylsäureestern hergestellt werden, die beschriebene Aufgabe, nämlich universelle Dispergierbarkeit erfüllen.

Gegenstand der Erfindung sind nichtionische Copolymere, erhältlich durch Polymerisation der

Monomere (A), (B), (C) und (D), wobei
(A) ein Monomer der Formel (I) 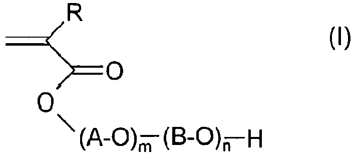 wobei
   - A: für C₂- bis C₄-Alkylen und
   - B: für ein von A unterschiedliches C₂- bis C₄-Alkylen steht,
   - R: für Wasserstoff oder Methyl steht,
   - m: eine Zahl von 1 bis 500, vorzugsweise 1 bis 50, ist;
   - n: eine Zahl von 1 bis 500, vorzugsweise 1 bis 50, ist,
   wobei die Summe m + n gleich 2 bis 1000 ist;
(B) ein Monomer der Formel (II) 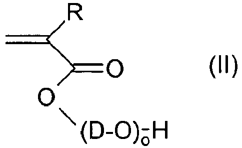 wobei
   - D: für C₃-Alkylen und
   - R: für Wasserstoff oder Methyl steht,
   - O: eine Zahl von 2 bis 500, vorzugsweise 2 bis 100, insbesondere 2 bis 50, besonders bevorzugt 5 bis 25, ist;
(C) ein ethylenisch ungesättigtes Monomer ist, das eine aromatische Gruppe enthält;
   und
(D) ein ethylenisch ungesättigtes Monomer ist, das einen Alkylrest enthält.

Das erfindungsgemäße Copolymer besitzt übliche endständige Gruppen, welche durch die Initiierung der radikalischen Polymerisation oder durch Kettenübertragungsreaktionen oder durch Kettenabbruchreaktionen entstehen, beispielsweise ein Proton, eine Gruppe aus einem Radikalinitiator oder eine schwefelhaltige Gruppe aus einem Kettenübertragungsreagenz.

Der molare Anteil der Monomere beträgt bevorzugt 0,1 bis 90 % für das Monomer (A), 0,1 bis 90 % für das Monomer (B), 0,1 bis 90 % für das Monomer (C) und 0,1 bis 90 % für das Monomer (D), wobei die Summe der molaren Anteile 100 % ergibt.

Besonders bevorzugt liegt der molare Anteil der Monomere bei 0,1 bis 70 % für Monomer (A), bei 10 bis 80 % für Monomer (B), bei 0,1 bis 50 % für Monomer (C) und bei 0,1 bis 50 % für das Monomer (D).

Die Alkylenoxideinheiten (A-O)ₘ und (B-O)ₙ des Monomeren (A) können entweder statistisch oder im Falle einer bevorzugten Ausführungsform blockartig angeordnet vorliegen.

In einer bevorzugten Ausführungsform steht (A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid-Einheiten, wobei der molare Anteil der Ethylenoxid-Einheiten bevorzugt 50 bis 98 %, insbesondere 60 bis 95 %, besonders bevorzugt 70 bis 95 %, bezogen auf die Summe (100 %) der Ethylenoxid- und Propylenoxid-Einheiten, beträgt.
Die Summe der Alkylenoxideinheiten kann prinzipiell n + m = 2 bis 1000 sein, bevorzugt ist 2 bis 500, insbesondere 2 bis 100, besonders bevorzugt 5 bis 50.

Bevorzugte Monomere (C) lassen sich durch die Formel (IIIa) oder Formel (IIIb) beschreiben: 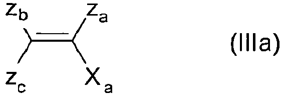 wobei
- Xₐ: für einen aromatischen oder araliphatischen Rest mit 3 bis 30 C-Atomen steht, der gegebenenfalls eines oder mehrere, z. B. 1, 2 oder 3, der Heteroatome N, O und S enthält,
- Zₐ: für H oder (C₁-C₄)-Alkyl steht,
- Z_{b}: für H oder (C₁-C₄)-Alkyl steht, und
- Z_{c}: für H oder (C₁-C₄)-Alkyl steht; 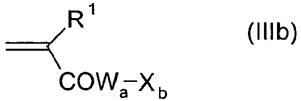
wobei
- R¹: für Wasserstoff oder Methyl steht,
- X_{b}: für einen aromatischen oder araliphatischen Rest mit 3 bis 30 C-Atomen steht, der gegebenenfalls eines oder mehrere, z.B. 1, 2 oder 3, der Heteroatome N, O und S enthält,
- Wₐ: für Sauerstoff oder die Gruppe NH steht.

Zu den Monomeren (C) gehören beispielsweise die folgenden Ester und Amide der Acrylsäure und Methacrylsäure: Phenyl, Benzyl, Tolyl, 2-Phenoxyethyl, Phenethyl.
Weitere Monomere (C) sind vinylaromatische Monomere wie Styrol und seine Derivate wie beispielsweise Vinyltoluol, alpha-Methylstyrol. Bei der aromatischen Einheit kann es sich auch um Heteroaromaten handeln, wie z. B. in 1-Vinylimidazol.
Besonders bevorzugte Monomere (C) können sein: Styrol, 1-Vinylimidazol, Benzylmethacrylat, 2-Phenoxyethylmethacrylat und Phenethylmethacrylat.

Bevorzugte Monomere (D) lassen sich durch die Formel (IV) beschreiben: 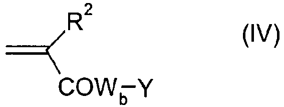 wobei
- R²: für Wasserstoff oder Methyl steht,
- Y: für einen aliphatischen Kohlenwasserstoffrest mit 1 bis 30 C-Atomen, vorzugsweise 6 bis 30, insbesondere 9 bis 20 C-Atomen, steht, der linear oder verzweigt, oder auch cyclisch sein kann, und die Heteroatome O, N und/oder S enthalten kann und auch ungesättigt sein kann,
- W_{b}: für Sauerstoff oder die Gruppe NH steht.

Zu den Monomeren (D) gehören beispielsweise die folgenden Ester und Amide der Acrylsäure und Methacrylsäure: Methyl-, Ethyl-, Propyl-, Isopropyl-, n-Butyl-, Isobutyl-, t-Butyl-, Pentyl-, Hexyl-, 2-Ethylhexyl-, 3,3-Dimethylbutyl-, Heptyl-, Octyl-, Isooctyl-, Nonyl-, Lauryl-, Cetyl-, Stearyl-, Behenyl-, Cyclohexyl-, Trimethylcyclohexyl-, t-Butylcyclohexyl-, Bornyl-, Isobornyl-, Adamantyl-, (2,2-Dimethyl-1-methyl)propyl-, Cyclopentyl-, 4-Ethyl-cyclohexyl-, 2-Ethoxyethyl-, Tetrahydrofurfuryl- und Tetrahydropyranyl.

Bevorzugte Monomere (D) sind die folgenden Alkyl-Ester bzw. Alkyl-Amide der Acrylsäure und Methacrylsäure: Methyl-, Ethyl-, Propyl-, Butyl-, Isobutyl-, 2-Ethoxyethyl-, Myristyl-, Octadecyl- und besonders bevorzugt 2-Ethylhexyl- und Lauryl-.

Die erfindungsgemäßen Copolymere besitzen ein Molekulargewicht von 10³ g/mol bis 10⁹ g/mol, besonders bevorzugt von 10³ bis 10⁷ g/mol, insbesondere bevorzugt 10³ bis 10⁵ g/mol.

Die Herstellung der erfindungsgemäßen Copolymere kann mittels radikalischer Polymerisation erfolgen. Die Polymerisationsreaktion kann kontinuierlich, diskontinuierlich oder semi-kontinuierlich durchgeführt werden.
Die Polymerisationsreaktion wird vorteilhafterweise als Fällungspolymerisation, Emulsionspolymerisation, Lösungspolymerisation, Substanzpolymerisation oder Gelpolymerisation geführt. Besonders vorteilhaft für das Eigenschaftsprofil der erfindungsgemäßen Copolymere ist die Lösungspolymerisation.

Als Lösungsmittel für die Polymerisationsreaktion können alle organischen oder anorganischen Lösungsmittel dienen, die sich bezüglich radikalischer Polymerisationsreaktionen weitestgehend inert verhalten, beispielsweise Ethylacetat, n-Butylacetat oder 1-Methoxy-2-propylacetat, sowie Alkohole wie z. B. Ethanol, i-Propanol, n-Butanol, 2-Ethylhexanol oder 1-Methoxy-2-propanol, ebenfalls Diole wie Ethylenglykol und Propylenglykol. Auch können Ketone wie Aceton, Butanon, Pentanon, Hexanon und Methylethylketon, Alkylester der Essig-, Propion- und Buttersäure wie beispielsweise Ethylacetat, Butylacetat und Amylacetat, Ether wie Tetrahydrofuran, Diethylether und Ethylenglykol- und Polyethylenglykol-monoalkylether und -dialkylether verwendet werden. Ebenso können aromatische Lösungsmittel wie z. B. Toluol, Xylol oder höher siedende Alkylbenzole eingesetzt werden. Ebenfalls ist der Einsatz von Lösungsmittelgemischen möglich, wobei sich die Wahl des Lösungsmittels oder der Lösungsmittel nach dem Einsatzzweck des erfindungsgemäßen Copolymeren richtet. Bevorzugt Verwendung finden Wasser; niedere Alkohole; bevorzugt Methanol, Ethanol, Propanole, iso-, sec.- und t-Butanol, 2-Ethylhexanol, Butylglykol und Butyldiglykol, insbesondere bevorzugt iso-Propanol, t-Butanol, 2-Ethylhexanol, Butylglykol und Butyldiglykol; Kohlenwasserstoffe mit 5 bis 30 Kohlenstoffatomen und Mischungen und Emulsionen der vorgenannten Verbindungen.

Die Polymerisationsreaktion erfolgt bevorzugt im Temperaturbereich zwischen 0 und 180 °C, besonders bevorzugt zwischen 10 und 100 °C, sowohl bei Normaldruck als auch unter erhöhtem oder erniedrigtem Druck. Gegebenenfalls kann die Polymerisation auch unter einer Schutzgasatmosphäre, vorzugsweise unter Stickstoff, ausgeführt werden.

Zur Auslösung der Polymerisation können energiereiche, elektromagnetische Strahlen, mechanische Energie oder die üblichen, chemischen Polymerisationsinitiatoren wie organische Peroxide, z. B. Benzoylperoxid, tert.-Butylhydroperoxid, Methylethylketon-peroxid, Cumoylperoxid, Dilauroylperoxid (DLP) oder Azoinitiatoren, wie z. B. Azodiisobutyronitril (AIBN), Azobisamidopropyl-hydrochlorid (ABAH) und 2,2'-Azobis(2-methylbutyronitril) (AMBN) verwendet werden. Ebenfalls geeignet sind anorganische Peroxyverbindungen, wie z. B. (NH₄)₂S₂O₈, K₂S₂O₈ oder H₂O₂, gegebenenfalls in Kombination mit Reduktionsmitteln (z. B. Natriumhydrogensulfit, Ascorbinsäure, Eisen(II)sulfat) oder Redoxsystemen, welche als reduzierende Komponente eine aliphatische oder aromatische Sulfonsäure (z. B. Benzolsulfonsäure, Toluolsulfonsäure) enthalten.

Als Molekulargewichtsregler kommen die üblichen Verbindungen zum Einsatz. Geeignete bekannte Regler sind z. B. Alkohole, wie Methanol, Ethanol, Propanol, Isopropanol, n-Butanol, sec.-Butanol und Amylalkohole, Aldehyde, Ketone, Alkylthiole, wie z. B. Dodecylthiol und tert.-Dodecylthiol, Thioglykolsäure, Isooctylthioglykolat und einige Halogenverbindungen, wie z. B. Tetrachlorkohlenstoff, Chloroform und Methylenchlorid.

Ein weiterer Gegenstand der vorliegenden Erfindung ist die Verwendung des erfindungsgemäßen Copolymers als Dispergiermittel, insbesondere für Pigmente und Füllstoffe, z. B. bei der Herstellung von wasser- oder lösungsmittelbasierenden Pigmentkonzentraten, die zum Einfärben von Dispersions- und Lackfarben, Anstrichmitteln, Beschichtungsstoffen und Druckfarben verwendet werden, sowie zum Einfärben oder Bedrucken von Papier, Kartonagen und Textilien.

### Synthesevorschrift:

In einem Kolben mit Rührer, Rückflusskühler, Innenthermometer und Stickstoffeinleitung werden das Monomer A, Monomer B, Monomer C, Monomer D und der Molekulargewichtsregler in Lösungsmittel unter Stickstoffeinleitung in den in nachfolgender Tabelle angegebenen Gewichtsteilen vorgelegt. Dann wird die Temperatur unter Rühren auf 80 °C gebracht und innerhalb einer Stunde eine Lösung des Initiators zudosiert. Es wird noch für 2 Stunden bei dieser Temperatur weitergerührt, dann das Lösemittel im Vakuum entfernt.

Die folgenden Tabellen enthalten Synthesebeispiele analog der obigen allgemeinen Synthesevorschrift.

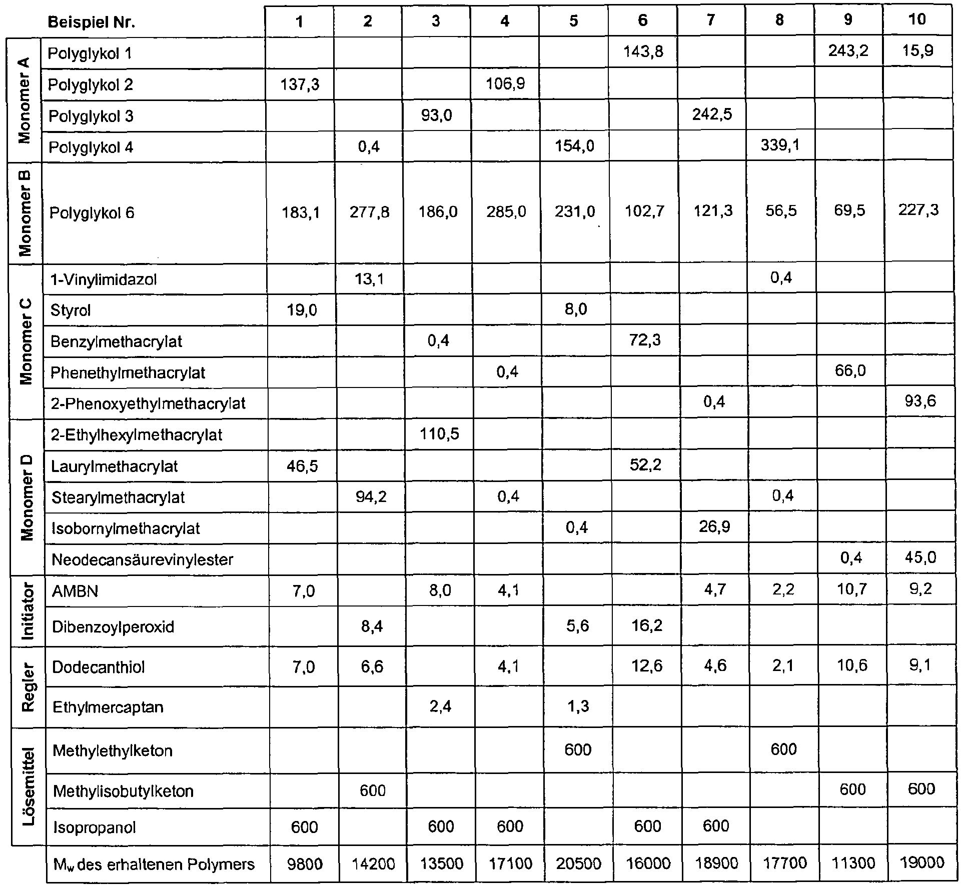

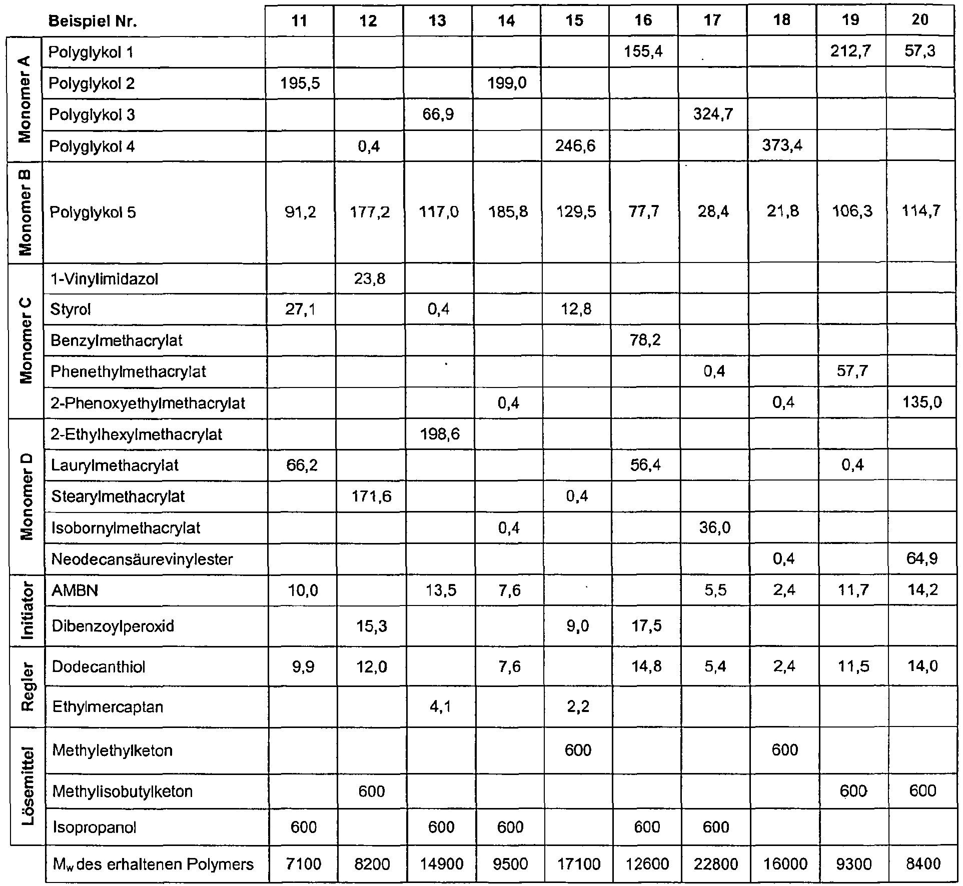

Zusammensetzung Monomer A:
   - Polyglykol 1: Polyalkylenglykolmonomethacrylsäureester (Formel (I), m = 2, n = 3-4; (A-O) entspricht [CH₂CH(CH₃)O)], (B-O) entspricht (CH₂CH₂O)), Molmasse ca. 350 g/mol
   - Polyglykol 2: Polyalkylenglykolmonomethacrylsäureester (Formel (I), m = 2, n = 12-13; (A-O) entspricht (CH₂CH(CH₃)O)), (B-O) entspricht (CH₂CH₂O)), Molmasse ca. 750 g/mol

   - Polyglykol 3: Polyalkylenglykolmonomethacrylsäureester (Formel (I), m = 2, n = 17-19; (A-O) entspricht (CH₂CH(CH₃)O)), (B-O) entspricht (CH₂CH₂O)), Molmasse ca. 1000 g/mol
   - Polyglykol 4: Polyalkylenglykolmonomethacrylsäureester (Formel (I), m = 2, n = 40-42; (A-O) entspricht (CH₂CH(CH₃)O)), (B-O) entspricht (CH₂CH₂O)), Molmasse ca. 2000 g/mol
Zusammensetzung Monomer B:
   - Polyglykol 5: Polypropylenglykolmonomethacrylsäureester (Formel (II), o = 4-5; (D-O) entspricht [CH₂CH(CH₃)O)], Molmasse ca. 350 g/mol
   - Polyglykol 6: Polypropylenglykolmonomethacrylsäureester (Formel (II), o = 15-16; (D-O) entspricht [CH₂CH(CH₃)O)], Molmasse ca. 1000 g/mol
AMBN = 2,2'-Azobis(2-methylbutyronitril)

### Anwendungsbeispiel

### Herstellung einer Pigmentpräparation

Das Pigment wurde, entweder als Pulver, Granulat oder als Presskuchen, zusammen mit dem Dispergiermittel und den anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert. Die anschließende Feindispergierung erfolgte mit Hilfe einer Perlmühle (z. B. mit AE3-M1 von VMA-Getzmann) oder aber einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgte. Im Anschluss wurden die Mahlkörper abgetrennt, die Pigmentpräparation isoliert und mit entionisiertem Wasser auf eine Konzentration von ca. 20 % eingestellt und mit Hilfe eines Sprühtrockners der Firma Büchi (Büchi 190) getrocknet. Es wurde ein trockenes Pulver erhalten.

### Beurteilung einer Pigmentpräparation

Die Bestimmung der Farbstärke und des Farbtons erfolgte nach DIN 55986. Geprüft wurden die wässrige Pigmentdispersion und das trockene Pulver (Farbstärke und die Verträglichkeiten mit dem einzufärbenden Medium) in einer herkömmlichen wasser-basierten Dispersionsfarbe für Innenanstriche und in einem herkömmlichen lösungsmittelhaltigen Lack. Für den "Rub-Out-Test" wurde die Farbe nach Mischen mit der Pigmentdispersion auf eine Lackkarte aufgetragen. Anschließend wurde mit dem Finger auf dem unteren Teil der Lackkarte nachgerieben. Unverträglichkeit lag vor, wenn die nachgeriebene Fläche dann kräftiger gefärbt ist als die angrenzende, nicht nachbehandelte Fläche (der "Rub-Out-Test" wird in DE 2 638 946 beschrieben).

Die Viskosität wurde mit einem Kegel-Platte-Viskosimeter (Roto Visco 1) der Firma Haake bei 20 °C bestimmt (Titankegel: Ø 60 mm, 1°), wobei die Abhängigkeit der Viskosität von dem Schergefälle in einem Bereich zwischen 0 und 200 s⁻¹ untersucht wurde. Die Viskositäten wurden bei einem Schergefälle von 60 s⁻¹ gemessen.
Für eine Beurteilung der Lagerstabilität der Dispersionen wurde die Viskosität direkt nach der Herstellung der Präparation gemessen, sowie nach vierwöchiger Lagerung bei 50 °C.

Die in dem folgenden Beispiel beschriebene Pigmentpräparation wurde nach dem zuvor beschriebenen Verfahren hergestellt, wobei die folgenden Bestandteile in den angegebenen Mengen so verwendet wurden, dass 100 Teile der Pigmentpräparation entstehen. In dem nachfolgenden Beispiel bedeuten Teile Gewichtsteile:

| | |
|---|---|
| 35 Teile | C.I. Pigment Gelb 74 |
| 14 Teile | Polymer aus Synthesebeispiel 11 (Tabelle) |
| 1 Teil | Benetzer |
| 50 Teile | Wasser |

Nach Trocknung hat die Pigmentpräparation folgende Zusammensetzung, hierbei wird ein Restwassergehalt von ca. 1 % vernachlässigt:

| | |
|---|---|
| 70 Teile | C.I. Pigment Gelb 74 |
| 28 Teile | Polymer aus Synthesebeispiel 11 (Tabelle) |
| 2 Teile | Benetzer |

Die Pigmentpräparation hat in der Weißdispersion und im Lack eine hohe Farbstärke und ist stabil. Der Rub-Out-Test zeigt keine Farbstärkeunterschiede im Vergleich zur nachgeriebenen Fläche. Die Dispersion erweist sich als fließfähig und stabil, da sie nach 28 Tagen Lagerung bei 50 °C ebenfalls noch fließfähig ist. Die Viskosität beträgt nach der Herstellung 1,26 Pa·s. Das trockene Pulver lässt sich spontan in die wasser-basierte Weißdispersion und in den lösungsmittelhaltigen Lack einrühren. Es wird 3 Minuten mit der Hand gerührt. In beiden Farbsystemen wird eine hohe Farbstärke erhalten sowie ein flockulationsstabiler, stippenfreier Auftrag. Der Rub-Out-Test zeigt keine Farbstärkeunterschiede im Vergleich zur nachgeriebenen Fläche.

## Patentansprüche

1. Nichtionisches Copolymer, erhältlich durch Polymerisation der Monomere (A), (B), (C) und (D), wobei
(A) ein Monomer der Formel (I) 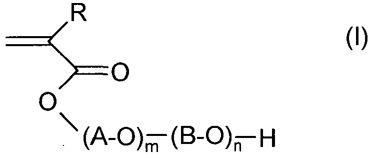 wobei
A für C₂- bis C₄-Alkylen und
B für ein von A unterschiedliches C₂- bis C₄-Alkylen steht,
R für Wasserstoff oder Methyl steht,
m eine Zahl von 1 bis 500 ist;
n eine Zahl von 1 bis 500 ist,
wobei die Summe m + n gleich 2 bis 1000 ist;
(B) ein Monomer der Formel (II) 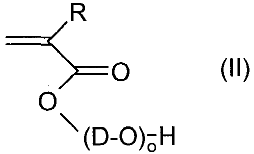 wobei
D für C₃-Alkylen und
R für Wasserstoff oder Methyl steht,
o eine Zahl von 2 bis 500 ist;
(C) ein ethylenisch ungesättigtes Monomer ist, das eine aromatische Gruppe enthält;
und
(D) ein ethylenisch ungesättigtes Monomer ist, das einen Alkylrest enthält.

2. Copolymer nach Anspruch 1, **dadurch gekennzeichnet, dass** der molare Anteil für das Monomer (A) 0,1 bis 90 %, für das Monomer (B) 0,1 bis 90 %, für das Monomer (C) 0,1 bis 90 % und für das Monomer (D) 0,1 bis 90 % beträgt, wobei die Summe der molaren Anteile 100 % ergibt.

3. Copolymer nach Anspruch 1 oder 2, **dadurch gekennzeichnet, dass** der molare Anteil für Monomer (A) 0,1 bis 70 %, für Monomer (B) 10 bis 80 %, für Monomer (C) 0,1 bis 50 % und für das Monomer (D) 0,1 bis 50 % beträgt, wobei die Summe der molaren Anteile 100 % ergibt.

4. Copolymer nach einem oder mehreren der Ansprüche 1 bis 3, **dadurch gekennzeichnet, dass** die Alkylenoxideinheiten (A-O)ₘ und (B-O)ₙ blockartig angeordnet sind.

5. Copolymer nach einem oder mehreren der Ansprüche 1 bis 4, **dadurch gekennzeichnet, dass** in Monomer (A) (A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid-Einheiten stehen.

6. Copolymer nach Anspruch 5, **dadurch gekennzeichnet, dass** in Monomer (A) der molare Anteil der Ethylenoxid-Einheiten 50 bis 98 %, bezogen auf die Summe der Ethylenoxid- und Propylenoxid-Einheiten, beträgt.

7. Copolymer nach einem oder mehreren der Ansprüche 1 bis 6, **dadurch gekennzeichnet, dass** das Monomer (C) eine Verbindung der Formel (IIIa) oder (IIIb) ist 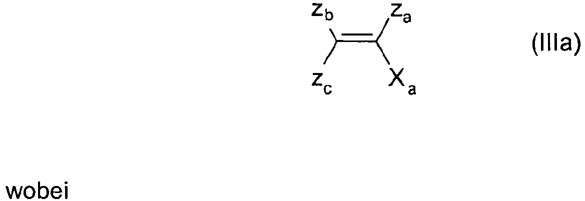
Xₐ für einen aromatischen oder araliphatischen Rest mit 3 bis 30 C-Atomen steht, der gegebenenfalls Heteroatome aus der Gruppe N, O und S enthält,
Zₐ für H oder (C₁-C₄)-Alkyl steht,
Z_{b} für H oder (C₁-C₄)-Alkyl steht, und
Z_{c} für H oder (C₁-C₄)-Alkyl steht; 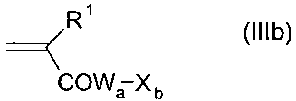
wobei
R¹ für Wasserstoff oder Methyl steht,
X_{b} für einen aromatischen oder araliphatischen Rest mit 3 bis 30 C-Atomen steht, der gegebenenfalls Heteroatome aus der Gruppe N, O und S enthält,
Wₐ für Sauerstoff oder die Gruppe NH steht.

8. Copolymer nach einem oder mehreren der Ansprüche 1 bis 7, **dadurch gekennzeichnet, dass** das Monomer (D) eine Verbindung der Formel (IV) ist 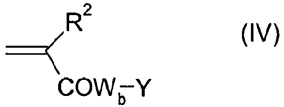 wobei
R² für Wasserstoff oder Methyl steht,
Y für einen aliphatischen Kohlenwasserstoffrest mit 1 bis 30 C-Atomen steht, der linear oder verzweigt, oder auch cyclisch sein kann, und Heteroatome aus der Gruppe O, N und S enthalten kann, sowie ungesättigt sein kann,
W_{b} für Sauerstoff oder die Gruppe NH steht.

9. Copolymer nach einem oder mehreren der Ansprüche 1 bis 8, **dadurch gekennzeichnet, dass** das Monomer (C) Styrol, 1-Vinylimidazol, Benzylmethacrylat, 2-Phenoxyethylmethacrylat oder Phenethylmethacrylat ist.

10. Copolymer nach einem oder mehreren der Ansprüche 1 bis 9, **dadurch gekennzeichnet, dass** das Monomer (D) ein Alkylester oder Alkylamid der Acrylsäure oder Methacrylsäure ist, wobei Alkyl die Bedeutung Methyl, Ethyl, Propyl, Butyl, Isobutyl, 2-Ethoxyethyl, Myristyl, Octadecyl, 2-Ethylhexyl oder Lauryl hat.

11. Verfahren zur Herstellung eines Copolymers nach einem oder mehreren der Ansprüche 1 bis 10, wobei die Monomere (A), (B), (C) und (D) radikalisch polymerisiert werden.

12. Verwendung eines Copolymers nach einem oder mehreren der Ansprüche 1 bis 10 als Dispergiermittel, insbesondere für Pigmente und Füllstoffe.

## Claims

1. Nonionic copolymer obtainable by polymerization of monomers (A), (B), (C) and (D), where
(A) is a monomer of formula (I) 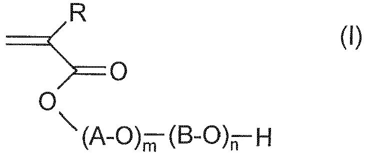 where
A represents C₂-C₄-alkylene,
B represents a C₂-C₄-alkylene other than A,
R represents hydrogen or methyl,
m is from 1 to 500;
n is from 1 to 500,
and the sum total of m + n is from 2 to 1000;
(B) is a monomer of formula (II) 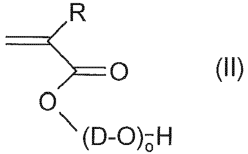 where
D represents C₃-alkylene,
R represents hydrogen or methyl,
o is from 2 to 500;
(C) is an ethylenically unsaturated monomer which contains an aromatic group;
and
(D) is an ethylenically unsaturated monomer which contains an alkyl radical.

2. The copolymer as claimed in claim 1, wherein the molar fraction of monomer (A) is 0.1 to 90%, of monomer (B) is 0.1 to 90%, of monomer (C) is 0.1 to 90% and of monomer (D) is 0.1 to 90%, the molar fractions summing to 100%.

3. The copolymer as claimed in claim 1 or 2, wherein the molar fraction of monomer (A) is 0.1 to 70%, of monomer (B) is 10 to 80%, of monomer (C) is 0.1 to 50% and of monomer (D) is 0.1 to 50%, the molar fractions summing to 100%.

4. The copolymer as claimed in one or more of claims 1 to 3, wherein the alkylene oxide units (A-O)m and (B-O)ₙ are in a blocklike arrangement.

5. The copolymer as claimed in one or more of claims 1 to 4, wherein in monomer (A) (A-O)m represents propylene oxide units and (B-O)ₙ represents ethylene oxide units, or (A-O)ₘ represents ethylene oxide units and (B-O)ₙ represents propylene oxide units.

6. The copolymer as claimed in claim 5, wherein the molar fraction of ethylene oxide units in monomer (A) is 50 to 98%, based on the sum total of ethylene oxide and propylene oxide units.

7. The copolymer as claimed in one or more of claims 1 to 6, wherein the monomer (C) is a compound of formula (IIIa) or (IIIb) 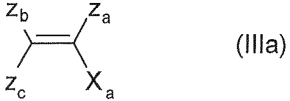 where
Xₐ represents an aromatic or araliphatic radical having 3 to 30 carbon atoms which optionally contains heteroatoms from the group consisting of N, O and S,
Zₐ represents H or (C₁-C₄)-alkyl,
Z_{b} represents H or (C₁-C₄)-alkyl, and
Z_{c} represents H or (C₁-C₄)-alkyl; 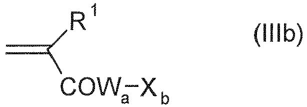
where
R¹ represents hydrogen or methyl,
X_{b} represents an aromatic or araliphatic radical having 3 to 30 carbon atoms which optionally contains heteroatoms from the group consisting of N, O and S,
Wₐ represents oxygen or an NH group.

8. The copolymer as claimed in one or more of claims 1 to 7, wherein the monomer (D) is a compound of formula (IV): 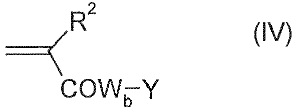 where
R² represents hydrogen or methyl,
Y represents an aliphatic hydrocarbyl radical having 1 to 30 carbon atoms, which may be linear or branched or else cyclic, and which may contain heteroatoms from the group consisting of O, N and S and may also be unsaturated,
W_{b} represents oxygen or an NH group.

9. The copolymer as claimed in one or more of claims 1 to 8, wherein the monomer (C) is styrene, 1-vinylimidazole, benzyl methacrylate, 2-phenoxyethyl methacrylate or phenethyl methacrylate.

10. The copolymer as claimed in one or more of claims 1 to 9, wherein the monomer (D) is an alkyl ester or alkylamide of acrylic acid or methacrylic acid, alkyl having the meaning methyl, ethyl, propyl, butyl, isobutyl, 2-ethoxyethyl, myristyl, octadecyl, 2-ethylhexyl or lauryl.

11. A process for producing a copolymer as claimed in one or more of claims 1 to 10, which comprises free-radically polymerizing the monomers (A), (B), (C) and (D).

12. The use of a copolymer as claimed in one or more of claims 1 to 10 as a dispersant, particularly for pigments and fillers.

## Revendications

1. Copolymère non ionique, pouvant être obtenu par polymérisation des monomères (A), (B), (C) et (D),
(A) étant un monomère de formule (I) 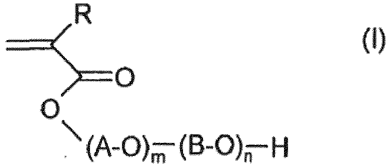 dans laquelle
A représente alkylène en C₂ à C₄, et
B représente un alkylène en C₂ à C₄ différent de A,
R représente hydrogène ou méthyle,
m représente un nombre de 1 à 500 ;
n représente un nombre de 1 à 500,
la somme de m + n étant de 2 à 1 000 ;
(B) étant un monomère de formule (II) 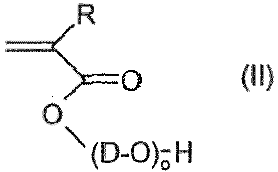 dans laquelle
D représente alkylène en C₃ et
R représente hydrogène ou méthyle,
O représente un nombre de 2 à 500 ;
(C) étant un monomère éthyléniquement insaturé qui contient un groupe aromatique ;
et
(D) étant un monomère éthyléniquement insaturé qui contient un radical alkyle.

2. Copolymère selon la revendication 1, **caractérisé en ce que** la proportion molaire du monomère (A) est de 0,1 à 90 %, du monomère (B) de 0,1 à 90 %, du monomère (C) de 0,1 à 90 % et du monomère (D) de 0,1 à 90 %, la somme des proportions molaires étant de 100 %.

3. Copolymère selon la revendication 1 ou 2, **caractérisé en ce que** la proportion molaire du monomère (A) est de 0,1 à 70 %, du monomère (B) de 10 à 80 %, du monomère (C) de 0,1 à 50 % et du monomère (D) de 0,1 à 50 %, la somme des proportions molaires étant de 100 %.

4. Copolymère selon une ou plusieurs des revendications 1 à 3, **caractérisé en ce que** les unités oxyde d'alkylène (A-O)ₘ et (B-O)ₙ sont agencées séquentiellement.

5. Copolymère selon une ou plusieurs des revendications 1 à 4, **caractérisé en ce que**, dans le monomère (A), (A-O)ₘ représente des unités oxyde de propylène et (B-O)ₙ des unités oxyde d'éthylène, ou (A-O)ₘ représente des unités oxyde d'éthylène et (B-O)ₙ des unités oxyde de propylène.

6. Copolymère selon la revendication 5, **caractérisé en ce que**, dans le monomère (A), la proportion molaire des unités oxyde d'éthylène est de 50 à 98 %, par rapport à
la somme des unités oxyde d'éthylène et oxyde de propylène.

7. Copolymère selon une ou plusieurs des revendications 1 à 6, **caractérisé en ce que** le monomère (C) est un composé de formule (IIIa) ou (IIIb) 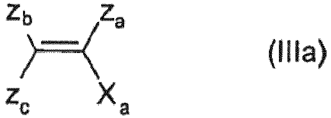 dans laquelle
Xₐ représente un radical aromatique ou araliphatique de 3 à 30 atomes C, qui contient éventuellement des hétéroatomes du groupe constitué par N, O et S,
Zₐ représente H ou alkyle en (C₁-C₄),
Z_{b} représente H ou alkyle en (C₁-C₄), et
Z_{c} représente H ou alkyle en (C₁-C₄) ; 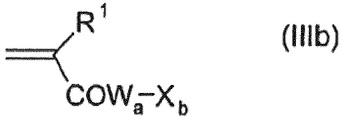 dans laquelle
R¹ représente hydrogène ou méthyle,
X_{b} représente un radical aromatique ou araliphatique de 3 à 30 atomes C, qui contient éventuellement des hétéroatomes du groupe constitué par N, O et S,
Wₐ représente oxygène ou le groupe NH.

8. Copolymère selon une ou plusieurs des revendications 1 à 7, **caractérisé, en ce que** le monomère (D) est un composé de formule (IV) 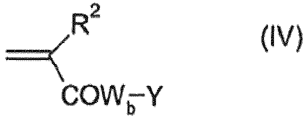 dans laquelle
R² représente hydrogène ou méthyle,
Y représente un radical hydrocarboné aliphatique de 1 à 30 atomes C, qui peut être linéaire ou ramifié, ou également cyclique, et qui peut contenir des hétéroatomes du groupe constitué par 0, N et S, et qui peut être insaturé,
W_{b} représente oxygène ou le groupe NH.

9. Copolymère selon une ou plusieurs des revendications 1 à 8, **caractérisé en ce que** le monomère (C) est le styrène, le 1-vinylimidazole, le méthacrylate de benzyle, le méthacrylate de 2-phénoxyéthyle ou le méthacrylate de phénéthyle.

10. Copolymère selon une ou plusieurs des revendications 1 à 9, **caractérisé en ce que** le monomère (D) est un ester alkylique ou un alkylamide de l'acide acrylique ou de l'acide méthacrylique, alkyle signifiant méthyle, éthyle, propyle, butyle, isobutyle, 2-éthoxyéthyle, myristyle, octadécyle, 2-éthylhexyle ou lauryle.

11. Procédé de fabrication d'un copolymère selon une ou plusieurs des revendications 1 à 10, selon lequel les monomères (A), (B), (C) et (D) sont polymérisés par voie radicalaire.

12. Utilisation d'un copolymère selon une ou plusieurs des revendications 1 à 10 en tant que dispersant, notamment pour pigments et charges.
